# EUROPÄISCHE PATENTSCHRIFT

(11) **EP 1 207 392 B1**
(45) Veröffentlichungstag und Bekanntmachung des Hinweises auf die Patenterteilung: **09.03.2005**
(21) Anmeldenummer: 01126725.9
(22) Anmeldetag: 09.11.2001
(51) Int. Cl.: G01N 33/48

(54) **Vorrichtung zum Aufnehmen von Mikrodissektaten**
Device for holding thin slices
Dispositif de support de tranches fines

(30) Priorität: 17.11.2000 DE 10057292
(43) Veröffentlichungstag der Anmeldung: 22.05.2002
(73) Patentinhaber: Leica Microsystems Wetzlar GmbH, 35578 Wetzlar (DE)
(72) Erfinder: Pfeifer, Gerhard, 35606 Solms (DE); Weiss, Albrecht, Dr., 35440 Linden (DE)
(74) Vertreter: Reichert, Werner F., Dr.

(56) Entgegenhaltungen:
- WO-A-00/31774
- DD-A- 245 501
- DE-A- 10 018 251
- DE-A- 19 527 722
- DE-A- 19 653 364
- DE-C- 19 647 663

## Beschreibung

Die Erfindung betrifft eine Vorrichtung zum Aufnehmen von Mikrodissektaten mit mindestens einem Behältnis zum Auffangen, wobei die Vorrichtung verschiebbar in einem durch eine Tischoberfläche eines x/y-Tisches und einer über dem x/y-Tisch angeordneten Kontaminationsschutzplatte definierten Freiraum angeordnet ist.

Die deutsche Patentanmeldung DE-A-100 18 251.8 beschreibt eine Vorrichtung zum Laserschneiden von Präparaten. Die Vorrichtung besitzt einen x/y-Tisch, der eine Tischoberfläche definiert. Eine Halterung zur Aufnahme eines Objektträgers mit einem Präparat ist auf der Tischoberfläche angeordnet und so mit dem x/y-Tisch verbunden ist, dass sie in y-Richtung und in x-Richtung verstellbar ist. Zwischen der Halterung und der Tischoberfläche ist ein freier Arbeitsraum definiert, in den eine Auffangvorrichtung mit mindestens einem Behältnis zum Auffangen eines ausgeschnittenen Präparatteils zuführbar ist. Eine sicheres Auffangen der ausgeschnittenen Präparate (Mikrodissektate), kann hier nicht ganz gewährleistet werden, da die Behältnisse nicht nahe genug an das Präparat herangebracht werden können.

Der vorliegenden Erfindung liegt daher die Aufgabe zugrunde eine Vorrichtung zum Auffangen von Mikrodissektaten zu schaffen, die ein sicheres Auffangen der Mikrodissektate gewährleistet und gleichzeitig eine einfache und benutzerfreundliche Bedienung ermöglicht.

Die Aufgabe wird durch eine Vorrichtung gelöst, die dadurch gekennzeichnet ist, dass das Behältnis auf einem separaten Halteelement in der Vorrichtung angeordnet ist, und dass jeweils ein Halteelement durch Verschieben der Vorrichtung in eine Auffangposition verbringbar ist.

Die Erfindung hat den Vorteil, dass die Auffangposition der Halteelemente in einer Ausführungsform derart ausgestaltet ist, dass das Behältnis mit der durch die Kontaminationsschutzplatte definierten oberen Ebene fluchtet. Dazu ist in der Kontaminationsschutzplatte ist ein Ausschnitt ausgeformt, durch den das Behältnis mit einem schwenkbaren Halteelement an die obere Ebene herangebracht werden kann. Der obere Rand des Behältnisses fluchtet mit der oberen Ebene. Ferner kann die Auffangposition der Halteelemente derart ausgestaltet sein, dass das Behältnis etwas durch den in der Kontaminationsschutzplatte geformten Ausschnitt hindurchgreift und somit die durch die Kontaminationsschutzplatte definierte obere Ebene überragt.

Die verwendeten Behältnisse, in welche die Mikrodissektate fallen, haben im allgemeinen eine topfförmige Gestalt. Sie besitzen eine Vertiefung, in der das Mikrodissektat zu liegen kommt. Eine mögliche Ausgestaltung eines Behältnisses ist, dass das Behältnis aus einem Deckel besteht, der über eine Lasche mit einem Unterteil verbunden ist. Der Deckel definiert eine Behältnisöffnung und der Deckel ist derart auf dem Halteelement befestigt, dass die Behältnisöffnung im wesentlichen in Richtung der Kontaminationsschutzplatte zeigt.

Als besonders vorteilhaft hat sich erwiesen, dass die Halteelemente in der Schublade schwenkbar angeordnet sind Dabei definiert eine Stange, die in der Schublade vorgesehen ist eine Schwenkachse, um die die Halteelemente schwenkbar sind. Weitere vorteilhafte Ausgestaltungen können den Unteransprüchen entnommen werden.

In der Zeichnung ist der Erfindungsgegenstand schematisch dargestellt und wird anhand der Figuren nachfolgend beschrieben. Dabei zeigen:
- Fig. 1:: einen Querschnitt durch einen x/y-Tisch, der zusätzlich eine Vorrichtung zum Auffangen vom Mikrodissektaten umfasst;
- Fig. 2:: eine perspektivische Ansicht der Schublade, die einen Teil der Vorrichtung zum Auffangen darstellt;
- Fig. 3:: eine perspektivische Ansicht der Vorrichtung zum Auffangen, wobei in der Schublade mehrere Halteelemente eingesetzt sind;
- Fig. 4:: eine Bodenansicht der Schublade der Vorrichtung zum Auffangen;
- Fig. 5:: eine Seitenansicht eines Ausführungsbeispiels der Halteelemente für die Behältnisse;
- Fig. 6:: eine perspektivische Ansicht der Halteelemente für die Behältnisse;
- Fig. 7: eine Seitenansicht eines Halteelements, das in der Vorrichtung zum Auffangen eingesetzt ist, wobei das Behältnis nicht in der Aufnahmeposition ist; und
- Fig. 8: eine Seitenansicht eines Halteelements, wobei sich das Behältnis in der Aufnahmeposition befindet.

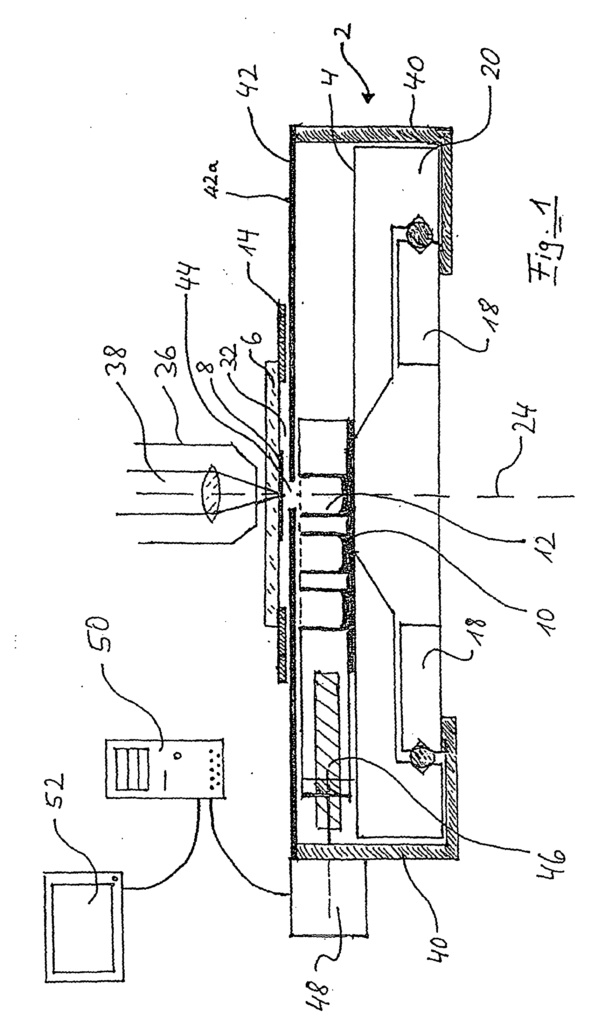

In Fig. 1 ist ein Querschnitt durch einen x/y-Tisch 2 dargestellt, auf dem eine durch ein Objektiv 36 definierte optische Achse 24 im wesentlichen senkrecht steht. Auf einer feststehenden Basisplatte 18 ist eine in y-Richtung verfahrbare Platte 20 angeordnet. Die Basisplatte 18 würde sich beim Verfahren aus der durch Fig. 1 definierten Zeichenebene herausbewegen. Die verfahrbare Platte 20 definiert die Tischoberfläche 4 des xy-Tisches 2. Auf der Tischoberfläche 4 ist eine Vorrichtung 10 zum Auffangen der Mikrodissektate vorgesehen, die mit einer Verstellvorrichtung 46, 48 versehen sein kann. Es ist selbstverständlich, dass die Vorrichtung 10 auch manuell in dem freien Arbeitsraum 16 bewegt werden kann.

Der Objektträgerhalter 14 definiert einen Freiraum 32 über den der Objektträger 6 derart angeordnet ist, dass sich das Präparat 8 vollständig in dem Freiraum 32 befindet. Bei einem auf dem Objektträgerhalter 14 befindlichen Objektträger 6 ist das Präparat 8 derart angeordnet, dass es auf die Tischoberfläche 4 hinweist. Das Objektiv 36 des Mikroskops (nicht dargestellt) ist auf der optischen Achse 24 dem Objektträger 6 zugeordnet und erzeugt ein Bild von dem Präparat 8. Ferner wird durch das Objektiv 36 ein eingekoppelter Laserstrahl 38 auf das Präparat 8 gerichtet, um aus dem Präparat 8 einen kleinen Teil, das sogenannte Mikrodissektat, auszuschneiden. Die Vorrichtung 10 zum Auffangen befindet sich derart unter dem Präparat 8, dass der ausgeschnittene Teil direkt aufgrund der Schwerkraft in ein Behältnis 12 der Auffangvorrichtung 10 fällt. Die Zahl der Behältnisse 12 der Auffangvorrichtung 10 kann an die Benutzungsbedingungen angepasst werden.

An der feststehenden Basisplatte 18 sind zwei Tragelemente 40 befestigt. Die Tragelemente 40 tragen eine Kontaminationsschutzplatte 42, die zwischen der Halterung 14 und der Auffangvorrichtung 10 relativ zur optischen Achse 24 feststeht. Die Kontaminationsschutzplatte 42 definiert eine obere Ebene 42a, auf der der Objektträgerhalter 14 aufliegt. Die Kontaminationsschutzplatte 42 überspannt die gesamte Tischoberfläche 4 und begrenzt damit den freien Arbeitsraum 16 nach oben. Sie ist mit einem Ausschnitt 44 um die optische Achse 24 versehen. Die Vorrichtung 10 zum Auffangen mit Behältnissen 12 für die Aufnahme der ausgeschnittenen Mikrodissektate ist in dem freien Arbeitsraum 16 angeordnet. Die Vorrichtung 10 zum Auffangen kann ein Array von Behältnissen 12 aufweisen. Durch die Kontaminationsschutzplatte 42 wird verhindert, dass Staub oder andere Partikel aus der Umgebungsluft sich in den Behältnissen 12 der Auffangvorrichtung 10 niederschlagen. Hinzu kommt, dass mit der Kontaminationsschutzplatte 42 der Niederschlag von Präparatteilen, die während des Laserschneidens aus dem Präparat 8 freigesetzt werden, in die Behältnisse 12 verhindert ist. Als vorteilhaft erweist sich hierbei, dass durch den Ausschnitt 44 in der Kontaminationsschutzplatte 42 immer nur ein Behältnis 12 der Vorrichtung 10 zum Auffangen offen ist, während die übrigen Behältnisse 12 abgedeckt sind.

Die Verstellvorrichtung 46 ist mit der Vorrichtung 10 zum Auffangen verbunden, und beide sind auf der Tischoberfläche 4 angeordnet. Neben der manuellen Bedienung der Verstellvorrichtung 46 kann auch ein Motor 48 für das motorische Verfahren der Verstellvorrichtung 46 auf der Tischoberfläche 4 vorgesehen sein. Der Motor 48 ist mit einem Rechner 50 verbunden, der für die Steuerung der Verstellvorrichtung 46 verantwortlich ist. Der Rechner 50 verschiebt die Vorrichtung 10 zum Auffangen derart, dass sich jeweils das gewünschte Behältnis 12 unter der Aussparung 44 und damit unter dem Bereich des Präparats 8 befindet, der gerade dem Laserschneidevorgang unterzogen ist. Wenn der Laserschneidevorgang abgeschlossen ist, fällt das ausgeschnittene Mikrodissektat aufgrund der Schwerkraft in das Behältnis 12. Der Rechner 50 wird, falls erforderlich, ein anderes oder leeres Behältnis 12 entsprechend positionieren, um damit ein neues ausgeschnittenes Mikrodissektat aufzufangen.

Der Rechner 50 ist ferner mit einem Monitor 52 verbunden. Über den Monitor 52 kann, z.B. mithilfe einer (nicht dargestellten) Maus ein gewünschtes Behältnis 12 ausgewählt werden. Hierzu ist auf dem Monitor 52 die Anzahl und die Anordnung der Behältnisse 12 schematisch dargestellt. Die Kontaminationsschutzplatte 42 ist direkt unter der Objektträgerhalterung 14 vorgesehen und das ausgewählte Behältnis wird aufgrund der Auswahl unter die Aussparung 44 verfahren. Dies kann vollautomatisch geschehen und erfordert kein Eingreifen des Benutzers.

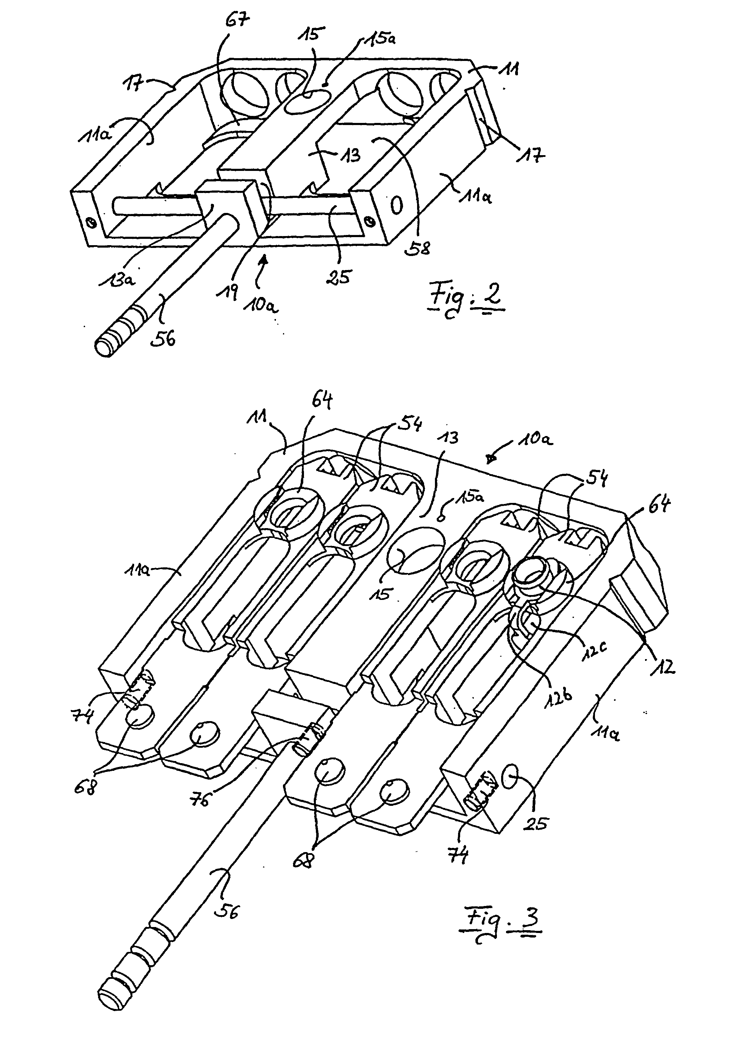

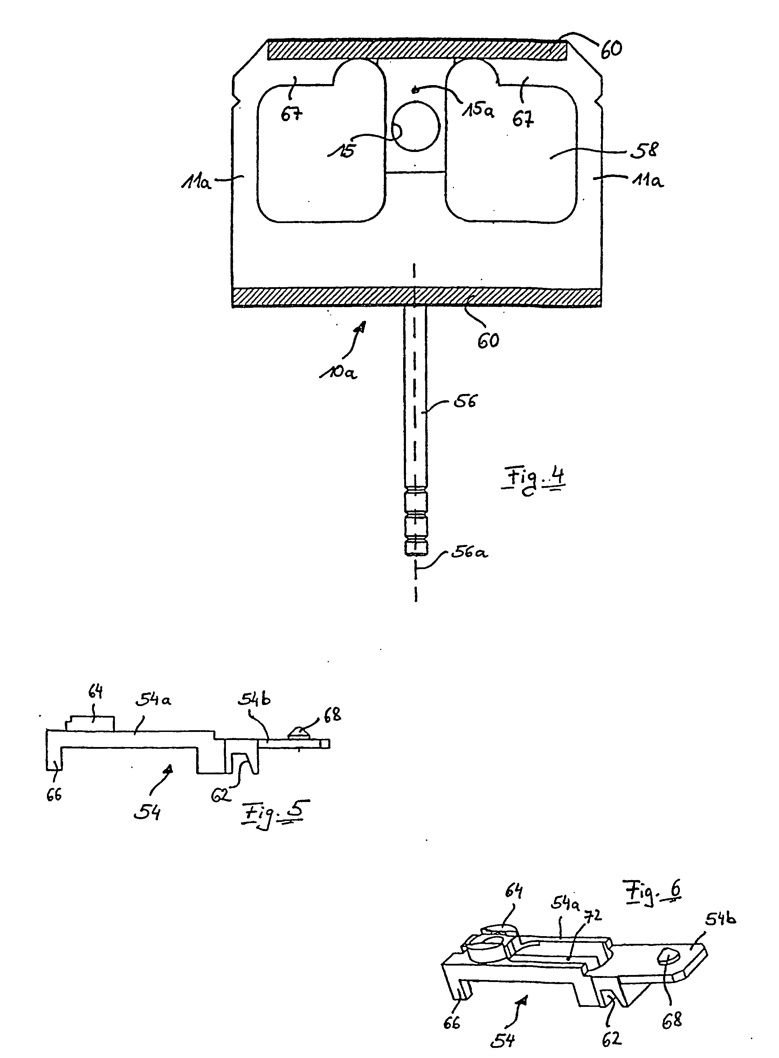

Fig. 2 beschreibt eine perspektivische Ansicht eines Teils der Vorrichtung 10 zum Auffangen. Die Vorrichtung 10 besteht aus einer Schublade 10a, die einen Rahmen 11 umfasst, der z.B. aus einem Werkstück gefräst oder aus Kunststoff spritzgegossen ist. Der Rahmen 11 besitzt ferner einen Mittelsteg 13, der eine Öffnung 15 zum Durchlass eines Beleuchtungslichts für das Präparat 8 und eine Justiermarke 15a umfasst. Die Justiermarke 15a dient dazu, die Position der Vorrichtung 10 bezüglich der optischen Achse 24 des Mikroskops zu bestimmen. Der Rahmen 11 besteht aus zwei gegenüberliegenden Seiten 11a, die mit einer länglichen Kerbe 17 versehen sein können. Die Kerben 17 definieren einen Angriffsbereich für die Verstellvorrichtung 46. Der Mittelsteg 13 besitzt eine Vertiefung 19, durch die eine Stange 25 geführt und in die beiden Seiten 11a eingelassen und gehaltert ist. Die Stange 25 ist zur Lagerung bzw. Auflage von Halteelementen 54 (siehe hierzu Fig. 3) für die Behältnisse 12 vorgesehen. Der Mittelsteg 13 definiert ebenfalls eine Stirnseite 13a, mit der ein Griffelement 56 verbunden ist. Das Griffelement 56 dient zur Handhabung und Einführung der Schublade 10a in die Vorrichtung 10 bzw. in den x/y-Tisch 2. Die Schublade 10a weist zusätzlich eine Freisparung 58 aus, die zum einen für die Halteelemente 54 eine ausreichende Bewegungsfreiheit und zum anderen für den Beleuchtungslichtstrahl (nicht dargestellt), der durch die Öffnung 15 tritt, ebenfalls eine Durchgangsmöglichkeit ermöglicht.

Fig. 3 zeigt die Schublade 10a mit mehreren eingesetzten Halteelementen 54. In dem hier dargestellten Ausführungsbeispiel sind vier Halteelemente 54 in die Schublade 10a eingesetzt. Es ist selbstverständlich, dass die Schublade 10a nicht ausschließlich zur Aufnahme von vier Halteelementen 54 ausgebildet sein muss. Die Halteelemente 54 besitzen eine Vertiefung 62 (siehe hierzu Fig. 5 und Fig. 6), die die Stange 25 teilweise umgreift. Die Halteelemente 54 sind lediglich auf die Stange 25 aufgelegt und werden durch die Vertiefung 62 (siehe Fig. 5 und Fig. 6) in ihrer Lage fixiert. Ohne Montieraufwand ist es somit möglich, die Halteelemente 54 schnell und einfach aus der Schublade 10a bzw. aus der Vorrichtung 10 zu entnehmen sind. Die Stange 25 kann z.B. durch Schrauben 74 gesichert sein, die in die Stirnseite der Seiten 11a der Schublade 10a eingreifen. Das Griffelement 56 der Vorrichtung 10 ist mit einer Griffschraube 76 mit der Schublade 10a verbunden. In dem vorliegenden Ausführungsbeispiel ist die Anzahl der Halteelemente 54 auf beiden Seiten des Mittelstegs 13 gleich groß. Der Mittelsteg 13 ist, wie bereits bei der Beschreibung zu Fig. 2, mit einer Justiermarke 15a und der Öffnung 15 für den Durchlass des Beleuchtungslichts zum Beleuchten des Präparats 8 auf dem Objektträger 6 versehen. Ebenso ist es bei der Ausgestaltung der Schublade 10a nicht erforderlich, dass der Mittelsteg 13 in der Mitte der Vorrichtung 10 angeordnet ist. Die hier gezeigte Ausgestaltung des Rahmens 11 soll in keiner Weise als Beschränkung aufgefasst werden. Die Länge der Seiten 11a der Schublade 10a sind derart bemessen, dass die Halteelemente 54 und die darauf angeordneten Noppen 68 darüber hinaus ragen. Die Halteelemente besitzen eine Befestigung 64 für ein Behältnis 12. Das Behältnis 12 besitzt eine topfartige Form in der das Mikrodissektat aufgefangen wird. In dem gezeigten Ausführungsbeispiel ist das Behältnis 12 über eine Lasche 12b mit einem Unterteil 12c verbunden. Es ist nicht erforderlich, dass in die Schublade 10a der Vorrichtung 10 ausschließlich gleiche oder gleich gestaltete Halteelemente 54 eingesetzt werden müssen.

Eine Bodenansicht der Schublade 10a ist in Fig. 4 dargestellt. Senkrecht zur Achse 56a des Griffelements 56 sind Gleitelemente 60 am Rahmen 11 befestigt. Die Gleitelemente 60 sind dazu vorgesehen, dass die Schublade 10a bzw. die gesamte Vorrichtung 10 leichtgängig auf der Tischoberfläche 4 gleitet. Die Gleitelemente 60 sind derart angebracht, dass sie sich annähernd vollständig zwischen den Seiten 11a erstrecken. Teflon™ ist ein mögliches Material zur Ausgestaltung der Gleitelemente 60.

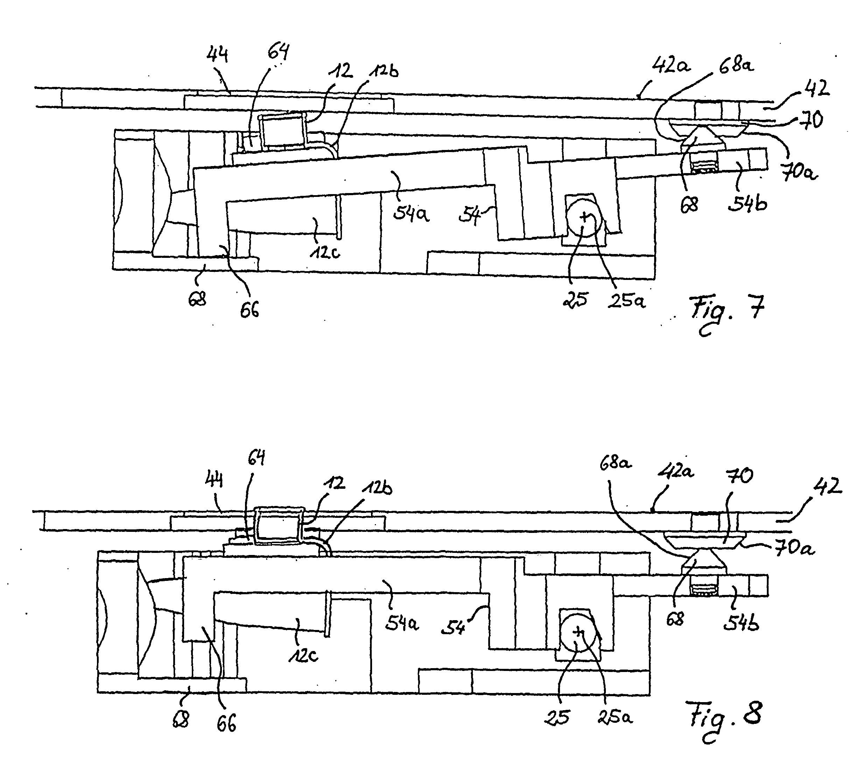

Eine Seitenansicht einer Ausführungsform des erfindungsgemäßen Halteelements 54 ist in Fig. 5 dargestellt. Das Halteelement 54 besitzt eine längliche und im wesentlichen rechteckige Form. Die Form des hier dargestellten Ausführungsbeispiels soll in keiner Weise als Beschränkung aufgefasst werden. Das Haltelement 54 besitzt eine Vertiefung 62, in die die Stange 25 eingreift. Das Haltelement 62 kann in einen ersten Teil 54a und einen zweiten Teil 54b unterteilt werden. Der erste Teil 54a erstreckt sich nach links, von der Vertiefung 62 aus gesehen, und der zweite Teil 54b erstreckt sich nach rechts, von der Vertiefung 62 aus gesehen. Aufgrund der ungleichen Massenverteilung bezüglich der Vertiefung 62 resultiert eine Neigung der Haltelemente 54, wenn die Stange 25 mit der Vertiefung 62 zusammenwirkt. Der erste Teil 54a des Halteelements 54 besitzt an dessen Ende eine Befestigung 64 für das Behältnis 12. Gegenüber der Befestigung 64 ist ein Anschlag 66 vorgesehen, der die Neigung des Haltelementes 54 in der Vorrichtung 10 nach unten hin begrenzt. Hierzu ist in der Schublade 10a ein Gegenstück 67 (siehe hierzu Fig. 2 oder Fig. 4) ausgeformt, das mit dem Anschlag 66 zusammenwirkt und die Neigung des Halteelements 54 begrenzt. Der zweite Teil 54b des Halteelements 54 trägt eine Noppe 68, die beim Verfahren der Vorrichtung 10 mit einer Nase 70 (siehe Fig. 7 und Fig. 8) zusammenwirkt, um somit die Neigung des Haltelements 54 zu verändern. Die Noppe 68 kann auf dem Halteelement 54 ausgebildet sein und aus dem gleichen Material wie das Halteelement 54 bestehen. Ebenso kann die Noppe 68 aus einem anderen Material wie das Halteelement 54 gebildet sein. Hierzu empfehlen sich Materialien, die einen geringen Reibungskoeffizienten besitzen, um somit den erforderlichen Kraftaufwand gering zu halten.

Die in Fig. 6 dargestellte perspektivische Ansicht des Halteelements 54 besitzt im ersten Teil 54a eine Freisparung 72, die für die Aufnahme bzw das Einsetzen eines speziell ausgeformten Behältnisses 12 dient.

Fig. 7 und Fig. 8 zeigen die Vorrichtung 10 im Zusammenspiel mit der Kontaminationsschutzplatte 42, die an ihrer Unterseite eine Nase 70 mit einer Abschrägung 70a aufweist. Die Nase 70 wirkt, wie bereits erwähnt, mit der Noppe 68 am zweiten Teil 54b des Halteelements 54 zusammen. In Fig. 7 ist die Situation dargestellt, dass sich die Noppe 68 noch vor der Nase 70 befindet und mit dieser noch nicht zusammenwirkt. Die durch die Vertiefung 62 des Halteelements 54 geführte Stange 25 ermöglicht die Drehung des Halteelements 54 um die Stange 25. Da, wie bereits bei der Beschreibung zu Fig. 5 und Fig. 6 erwähnt, der erste Teil 54a des Halteelements 54 eine größere Masse aufweist als der zweite Teil 54b, ist das Halteelement 54 bezüglich der Kontaminationsschutzplatte 42 geneigt. Der Anschlag 66 des Halteelements 54 wirkt mit einem entsprechenden Gegenstück 68 an der Schublade 10a zusammen, die die Neigung des Halteelements 54 beschränkt. In den ersten Teil 54a des Halteelements 54 ist ein Behältnis 12 eingesetzt. Das Behältnis 12 besteht aus einem Deckel 12a, der über eine Lasche 12b mit einem Unterteil 12c verbunden ist. Der Deckel 12a des Behältnisses 12 ist in der Befestigung 64 eingesetzt und das Unterteil 12c ist unterhalb der Befestigung 64 am ersten Teil 54a des Halteelements 54 eingesetzt. Der Deckel 12a greift dabei nicht in den Ausschnitt 44 in der Kontaminationsschutzplatte 42 ein.

Bei weiterer Verschiebung der Vorrichtung 10 tritt, wie in Fig. 8 dargestellt, die Noppe 68 des Halteelements 54 mit der Nase 70 der Kontaminationsschutzplatte 42 in Wirkzusammenhang. Die Abschrägung 70a der Nase 70 und die Abschrägung 68a der Noppe 68 wirken derart zusammen, dass das Halteelement 54 angehoben wird und das Behältnis 12 zumindest mit der oberen Ebene 42a der Kontaminationsschutzplatte 42 fluchtet. Es wird angestrebt, dass das Behältnis 12 so nahe wie möglich an das Präparat 8 herangebracht wird, um eine sichere Aufnahme des ausgeschnittenen Mikrodissektats zu gewährleisten. Das Behältnis 12 wird dann durch den Ausschnitt 44 in der Kontaminationsschutzplatte 42 hindurchragen und sich etwas über die obere Ebene 42a der Kontaminationsschutzplatte 42 erheben. In der in Fig. 7 und Fig. 8 dargestellten Ausführungsbeispiel tritt durch das Zusammenwirken der Nase 70 mit der Noppe 68 eine Schwenkbewegung des Halteelements 54 um die durch den Stab 25 definierte Achse 25a ein. Dabei wird der zweite Teil 54b des Halteelements 54 abgesenkt und der erste Teil 54a des Halteelements 54 angehoben, so daß das Behältnis 12 in die oben beschriebene Stellung verbracht wird.

Die Erfindung wurde in bezug auf eine besondere Ausführungsform beschreiben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 2: x/y-Tisch
- 4: Tischoberfläche
- 6: Objektträger
- 8: Präparat
- 10: Vorrichtung zum Auffangen
- 10a: Schublade
- 11: Rahmen
- 11a: Seite
- 12: Behältnis
- 12a: Deckel
- 12b: Lasche
- 12c: Unterteil
- 12d: Behältnisöffnung
- 13: Mittelsteg
- 13a: Stirnseite
- 14: Objektträgerhalter
- 15: Öffnung
- 15a: Justiermarke
- 16: freier Arbeitsraum
- 17: Kerbe
- 18: feststehende Basisplatte
- 19: Vertiefung
- 20: in y-Richtung verfahrbare Platte
- 21: Rändelschraube
- 22: Linearführung
- 22a: x-Richtung
- 23: Rollenlager
- 24: optische Achse
- 25: Stange
- 25a: Achse
- 26: Aussparung
- 28: erster Schenkel
- 30: zweiter Schenkel
- 32: Freiraum
- 36: Objektiv
- 38: Laserstrahl
- 40: Tragelement
- 42: Kontaminationsschutzplatte
- 42a: obere Ebene der Kontaminationsschutzplatte
- 44: Ausschnitt
- 46: Verstellvorrichtung
- 48: Motor
- 50: Rechner
- 52: Monitor
- 54: Halteelemente
- 54a: erster Teil
- 54b: zweiter Teil
- 56: Griffelement
- 56a: Achse
- 58: Freisparung
- 60: Gleitelement
- 62: Vertiefung
- 64: Befestigung
- 66: Anschlag
- 67: Gegenstück
- 68: Noppe
- 68a: Abschrägung
- 70: Nase
- 70a: Abschrägung
- 72: Freisparung
- 74: Schraube
- 76: Griffschraube

## Patentansprüche

1. Vorrichtung (10) zum Aufnehmen von Mikrodissektaten mit mindestens einem Behältnis (12) zum Auffangen, wobei die Vorrichtung verschiebbar in einem durch eine Tischoberfläche (4) eines x/y-Tisches (2) und eine Kontaminationsschutzplatte (42) definierten Freiraum (32) angeordnet ist, **dadurch gekennzeichnet, dass** das Behältnis (12) auf einem separaten Halteelement (54) in der Vorrichtung angeordnet ist, und dass jeweils ein Halteelement (54) durch Verschieben der Vorrichtung (10) in eine Auffangposition verbringbar ist.

2. Vorrichtung nach Anspruch 1, **gekennzeichnet durch** eine Schublade (10a) die zusammen mit den Halteelementen (54) in die Vorrichtung (10) einsetzbar ist.

3. Vorrichtung nach Anspruch 1, **dadurch gekennzeichnet, dass** die Auffangposition der Halteelemente (54) derart ausgestaltet ist, dass das Behältnis (12) mit der durch die Kontaminationsschutzplatte (42) definierten oberen Ebene (42a) fluchtet.

4. Vorrichtung nach Anspruch 1, **dadurch gekennzeichnet, dass** die Auffangposition der Halteelemente (54) derart ausgestaltet ist, dass das Behältnis (12) durch einen in der Kontaminationsschutzplatte (42) geformten Ausschnitt (44) hindurchgreift und somit die durch die Kontaminationsschutzplatte (42) definierte obere Ebene (42a) überragt.

5. Vorrichtung nach einem der Ansprüche 1 bis 4, **dadurch gekennzeichnet, dass** das Behältnis (12) aus einem Deckel (12a) besteht, der über eine Lasche (12b) mit einem Unterteil (12c) verbunden ist, dass der Deckel (12) eine Behältnisöffnung (12d) definiert und dass der Deckel (12a) derart auf dem Halteelement (54) befestigt ist, dass die Behältnisöffnung (12d) im wesentlichen in Richtung der Kontaminationsschutzplatte (42) zeigt.

6. Vorrichtung nach Anspruch 5, **dadurch gekennzeichnet, dass** die Behältnisöffnung (12d) bei einem angehobenem Halteelement (54) im wesentlichen parallel mit der Kontaminationsschutzplatte (42) ist.

7. Vorrichtung nach Anspruch 1, **dadurch gekennzeichnet, dass** die Halteelemente (54) in der Schublade (10a) schwenkbar angeordnet sind und dass eine Stange (25) in der Schublade (10a) vorgesehen ist die eine Achse (25a) darstellt um die die Halteelemente (54) schwenkbar sind.

8. Vorrichtung nach Anspruch 7, **dadurch gekennzeichnet, dass** jedes der Halteelemente (54) aus einem ersten und einem zweiten Teil (54a, 54b) besteht, dass eine Vertiefung (62) im Halteelement (54) ausgebildet ist, die ein Lager um die Stange (25) darstellt, und der Schwerpunkt im ersten Teil (54a) des Halteelements (54) liegt.

9. Vorrichtung nach Anspruch 8, **dadurch gekennzeichnet, dass** am ersten Teil (54a) des Haltelements (54) eine Befestigung (64) vorgesehen ist, die zur Aufnahme und Halterung des Behältnisses (12) ausgestaltet ist.

10. Vorrichtung nach Anspruch 8, **dadurch gekennzeichnet, dass** am ersten Teil (54a) des Haltelements (54) ein Anschlag (66) vorgesehen ist, der mit einem entsprechenden Gegenstück der Schublade (10a) zusammenwirkt, um die Neigung des Halteelements (54) zu beschränken.

## Claims

1. Apparatus (10) for receiving microdissected specimens having at least one receptacle (12) for collection, the apparatus being arranged displaceably in an open space (32) defined by a stage surface (4) of an x-y stage (2) and a contamination shielding panel (42), **characterized in that** the receptacle (12) is arranged on a separate holding element (54) in the apparatus, and **in that** by shifting the apparatus (10), one holding element (54) at a time can be brought into a collection position.

2. Apparatus according to Claim 1, **characterized by** a drawer (10a) that can be placed into the apparatus (10) together with the holding elements (54).

3. Apparatus according to Claim 1, **characterized in that** the collection position of the holding elements (54) is configured in such a way that the receptacle (12) is flush with the upper plane (42a) defined by the contamination shielding panel (42).

4. Apparatus according to Claim 1, **characterized in that** the collection position of the holding elements (54) is configured in such a way that the receptacle (12) penetrates through a cutout (44) shaped in the contamination shielding panel (42) and thus projects beyond the upper plane (42a) defined by the contamination shielding panel (42).

5. Apparatus according to one of Claims 1 to 4, **characterized in that** the receptacle (12) comprises a cover (12a) that is joined via a tab (12b) to a lower part (12c), **in that** the cover (12a) defines a receptacle opening (12d), and **in that** the cover (12a) is attached to the holding element (54) in such a way that the receptacle opening (12d) faces substantially in the direction of the contamination shielding panel (42).

6. Apparatus according to Claim 5, **characterized in that** when a holding element (54) is raised, the receptacle opening (12d) is substantially parallel to the contamination shielding panel (42).

7. Apparatus according to Claim 1, **characterized in that** the holding elements (54) are arranged pivotably in the drawer (10a), and **in that** a rod (25) which defines an axis (25a) about which the holding elements (54) are pivotable is provided in the drawer (10a).

8. Apparatus according to Claim 7, **characterized in that** each of the holding elements (54) comprises a first and a second part (54a, 54b), **in that** a depression (62) that constitutes a bearing about the rod (25) is configured in the holding element (54), and the centre of gravity lies in the first part (54a) of the holding element (54).

9. Apparatus according to Claim 8, **characterized in that** a mount (64) that is configured to receive and retain the receptacle (12) is provided on the first part (54a) of the holding element (54).

10. Apparatus according to Claim 8, **characterized in that** a stop (66), which coacts with a corresponding counterelement of the drawer (10a) in order to limit the tilt of the holding element (54), is provided on the first part (54a) of the holding element (54).

## Revendications

1. Dispositif (10) pour recevoir des tranches fines comprenant au moins un récipient (12) d'accueil, le dispositif étant disposé de manière à pouvoir se déplacer dans un espace libre (32) défini par une surface de table (4) d'une table x/y (2) et une plaque de protection contre la contamination (42), **caractérisé en ce que** le récipient (12) est disposé sur un élément de maintien (54) séparé dans le dispositif et qu'un élément de maintien (54) peut à chaque fois être amené dans une position de réception en déplaçant le dispositif (10) .

2. Dispositif selon la revendication 1, **caractérisé par** un tiroir (10a) qui peut être utilisé dans le dispositif (10) en combinaison avec les éléments de maintien (54).

3. Dispositif selon la revendication 1, **caractérisé en ce que** la position de réception des éléments de maintien (54) est configurée de telle sorte que le récipient (12) soit à fleur avec le plan supérieur (42a) défini par la plaque de protection contre la contamination (42).

4. Dispositif selon la revendication 1, **caractérisé en ce que** la position de réception des éléments de maintien (54) est configurée de telle sorte que le récipient (12) passe à travers une découpe (44) formée dans la plaque de protection contre la contamination (42) et dépasse ainsi du plan supérieur (42a) défini par la plaque de protection contre la contamination (42).

5. Dispositif selon l'une des revendications 1 à 4, **caractérisé en ce que** le récipient (12) se compose d'un couvercle (12a) qui est relié à une partie inférieure (12c) par le biais d'une languette (12b), **en ce que** le couvercle (12a) définit une ouverture de récipient (12d) et **en ce que** le couvercle (12a) est fixé sur l'élément de maintien (54) de telle sorte que l'ouverture de récipient (12d) soit pour l'essentiel dirigée vers la plaque de protection contre la contamination (42).

6. Dispositif selon la revendication 5, **caractérisé en ce que** l'ouverture de récipient (12d), lorsque l'élément de maintien (54) est soulevé, est pour l'essentiel parallèle à la plaque de protection contre la contamination (42).

7. Dispositif selon la revendication 1, **caractérisé en ce que** les éléments de maintien (54) sont disposés dans le tiroir (10a) de manière à pouvoir pivoter et **en ce qu'**il est prévu une tige (25) dans le tiroir (10a) qui représente un axe (25a) autour duquel peuvent pivoter les éléments de maintien (54).

8. Dispositif selon la revendication 7, **caractérisé en ce que** chacun des éléments de maintien (54) se compose d'une première et d'une deuxième partie (54a, 54b), **en ce qu'**un creux (62) est formé dans l'élément de maintien (54), lequel représente un palier autour de la tige (25) et le centre de gravité se trouve dans la première partie (54a) de l'élément de maintien (54).

9. Dispositif selon la revendication 8, **caractérisé en ce que** sur la première partie (54a) de l'élément de maintien (54) est prévue une fixation (64) qui est configurée pour recevoir et supporter le récipient (12).

10. Dispositif selon la revendication 8, **caractérisé en ce que** sur la première partie (54a) de l'élément de maintien (54) est prévue une butée (66) qui agit conjointement avec une pièce homologue correspondante du tiroir (10a) pour limiter l'inclinaison de l'élément de maintien (54).
